# EUROPEAN PATENT SPECIFICATION

(11) **EP 2 984 052 B1**
(45) Date of publication and mention of the grant of the patent: **26.12.2018**
(21) Application number: 14782906.3
(22) Date of filing: 11.04.2014
(51) Int. Cl.: C03C 27/12, B32B 37/06, B32B 37/08, B32B 37/18, E06B 9/24, E06B 3/663, E06B 3/67, E06B 3/673, E06B 3/677

(54) **METHODS OF FABRICATING A PRESSURE COMPENSATED INSULATED GLASS UNIT**
VERFAHREN ZUM HERTELLEN EINER DRUCKKOMPENSIERTEN ISOLIERVERGLASUNG
PROCÉDÉS DE FABRICATION D'UN VITRAGE ISOLÉ COMPENSÉ EN PRESSION

(30) Priority: 11.04.2013 US 201361810994 P
(43) Date of publication of application: 17.02.2016
(73) Proprietor: View, Inc., Milpitas, CA 95035 (US)
(72) Inventor: PARKER, Ronald M., Olive Branch, Mississippi 38654 (US); FRANK, Trevor, San Jose, California 95123 (US); TAYLOR, Ryan, Santa Rosa, California 95405 (US)
(74) Representative: Johnston, Magnus George
(86) International application number: PCT/US2014/033870
(87) International publication number: WO 2014/169253

(56) References cited:
- CH-A- 525 376
- DE-A1- 3 918 913
- DE-A1- 19 611 245
- US-A- 4 941 302
- US-A- 5 313 761
- US-A- 5 948 195
- US-A- 5 948 195
- US-A- 6 068 720
- US-A1- 2012 147 449
- US-B1- 6 407 847

## Description

### FIELD

This disclosure relates generally to methods of fabricating pressure compensated insulated glass units (IGUs). The pressure compensated IGUs include one or more electrochromic devices.

### BACKGROUND

Various optically switchable devices are available for controlling tinting, reflectivity, etc., of window panes or lites. Electrochromic devices are one example of optically switchable devices. Electrochromism is a phenomenon in which a material exhibits a reversible electrochemically-mediated change in an optical property when placed in a different electronic state, typically by being subjected to a voltage change. The optical property being manipulated is typically one or more of color, transmittance, absorbance, and reflectance. One well-known electrochromic material is tungsten oxide (WO₃). Tungsten oxide is a cathodic electrochromic material in which a coloration transition, transparent to blue, occurs by electrochemical reduction.

Electrochromic materials may be incorporated into, for example, windows for home, commercial, and other uses. The color, transmittance, absorbance, and/or reflectance of such windows may be changed by inducing a change in the electrochromic material; i.e., electrochromic windows are windows that can be darkened or lightened electronically. A small voltage applied to an electrochromic device of the window will cause it to darken; reversing the voltage causes it to lighten. This capability allows for control of the amount of light that passes through the window, and presents an enormous opportunity for electrochromic windows to be used not only for aesthetic purposes but also for significant energy-savings. With energy conservation being foremost in modern energy policy, it is expected that growth of the electrochromic window industry will be robust in the coming years.

DE 39 18 913 A1 discloses a method of fabricating a pressure compensated IGU, the method comprising providing an IGU comprising a first lite, a second lite, and a spacer between the first and second lites, introducing an inert gas into the interior volume of the IGU by penetrating a seal in the spacer of the IGU, and resealing the IGU.

US 2012/147449 A1 discloses an electrochromic device for controlling tinting, reflectivity, etc., of window panes or lites, and controlling therefore the amount of light that passes through said window panes or lites, allowing saving energy.

### SUMMARY

The disclosure concerns methods for fabricating pressure compensated IGUs. The pressure compensated IGU includes one or more electrochromic devices.

In certain aspects, the invention concerns methods of fabricating an IGU comprising providing a vented IGU having a first lite, a second lite, and a spacer between the first and second lites, the spacer comprising one or more open vent ports, wherein an electrochromic device coating is disposed on a surface of at least one of the lites, heating or cooling the vented IGU, introducing an inert gas into the interior volume of the vented IGU via the one or more vent ports, and sealing the one or more open vent ports before the IGU comes to ambient temperature. In certain cases, the inert gas is substantially moisture free. In certain aspects, the invention concerns methods of fabricating a pressure compensated IGU, the method comprising: a) providing an IGU having a first lite, a second lite, and a spacer between the first and second lites, wherein an electrochromic device coating is disposed on a surface of at least one of the lites; b) introducing or removing an inert gas into or from the interior volume of the IGU by penetrating a seal in the spacer of the IGU, wherein the IGU is heated or cooled while the inert gas is introduced or removed; and c) resealing the IGU.

In one case, the spacer of the IGU has a sealable septum through which the inert gas is removed or introduced. The sealable septum may comprise a heat sealing polymer so that resealing the IGU comprises applying heat to the area of the penetrated sealing septum.

Certain aspects of the disclosure concern methods of manufacturing IGUs where during a gas fill stage, the IGUs are filled with a heated or cooled (relative to ambient) gas, e.g. argon, xenon, krypton and mixtures thereof, and sealed in order to create (once at ambient temperature) a partially evacuated or a partially pressurized IGU. The described IGUs compensate for pressure differences between the manufacturing site and the installation site. Described embodiments go against conventional wisdom by intentionally fabricating IGUs with the altitude of the installation site in mind.

Embodiments described may avoid the use of pressure equalizing capillary or breather tubes, which inevitably allow inert gas fill to escape and/or add unwanted processing steps to IGU fabrication. The IGUs are sealed with the heated or cooled gas within the sealed volume of the IGU. The temperature of the gas is chosen so as not to result in implosion or explosion of the IGU, compromise the seal and/or apply undue stress to any coatings on the lites of the IGU. For example, IGUs having one or more electrochromic device coatings on one or both lites of the IGU are fabricated using methods described herein. The pressure compensated IGU is manufactured such that the curvature, convex or concave, of the IGU lites is not such as to damage the seal or any coatings on the lite surfaces. Moreover, in certain embodiments, the pressure or partial vacuum in the interior volume of the IGU is configured to approximate the ambient pressure at the installation site. Thus, once installed, the convex or concave form imparted to the glass by virtue of the partial pressure or vacuum inside the IGU is reduced or eliminated by virtue of the IGUs internal pressure approximating or matching that of the ambient at the installation site.

These and other features and advantages will be described in further detail below, with reference to the associated drawings.

### BRIEF DESCRIPTION OF THE DRAWINGS

**Figure 1A** is a simplified illustration of an IGU fabrication process being useful for understanding the invention.
**Figure 1B** depicts a cut away close up of an IGU's structure.
**Figure 2A** is a flowchart illustrating an example of a method of fabricating a pressure compensated IGU not forming part of the invention but representing background art that is useful for understanding the invention.
**Figure 2B** is a flowchart illustrating a method of fabricating a pressure compensated IGU forming part of the invention.
**Figure 2C** is a flowchart illustrating a method of fabricating a pressure compensated IGU forming part of the invention.
**Figure 3** depicts a schematic of an apparatus for manufacturing pressure compensated IGUs.

### DETAILED DESCRIPTION

It should be understood that while certain disclosed examples focus on IGUs with electrochromic devices, the concepts disclosed herein may apply to fabrication of other IGUs and other types of optically switchable devices, including liquid crystal devices, suspended particle devices, and the like. For example, a liquid crystal device or a suspended particle device, instead of an electrochromic device, could be incorporated into certain disclosed examples. For example, one or more lites of an IGU may be a laminated structure having a liquid crystal, suspended particle, or electrochromic device between laminated substrates. If the device is an all solid state device, e.g. an all solid state electrochromic device, the device coating may be on a single substrate (pane) of an IGU. Typically, such all solid state devices are protected by the protected environment afforded by the sealed volume of an IGU which typically includes an inert gas which is often dry as well.

In disclosed embodiments, an IGU includes at least two substantially transparent substrates having a spacer disposed between the substrates. For example, an IGU may include two glass sheets (lites) registered with a spacer (e.g., metal or polymeric spacer) having a smaller width and length than the glass lites and disposed between the lites. At least one lite includes an electrochromic device disposed thereon. In some cases, one of the substantially transparent substrates may be a laminate structure of lites. An IGU is typically hermetically sealed, having an interior volume that is isolated from the ambient environment. In an IGU having two substantially transparent substrates, the interior volume can be approximately defined by the interior surfaces of the two substantially transparent substrates and the interior perimeter surfaces of the spacer.

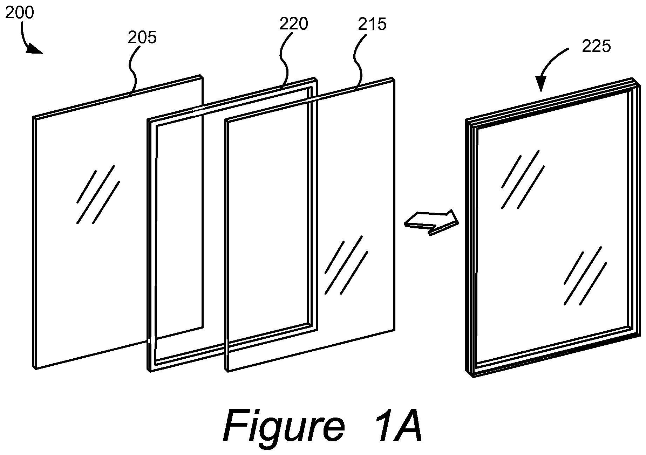

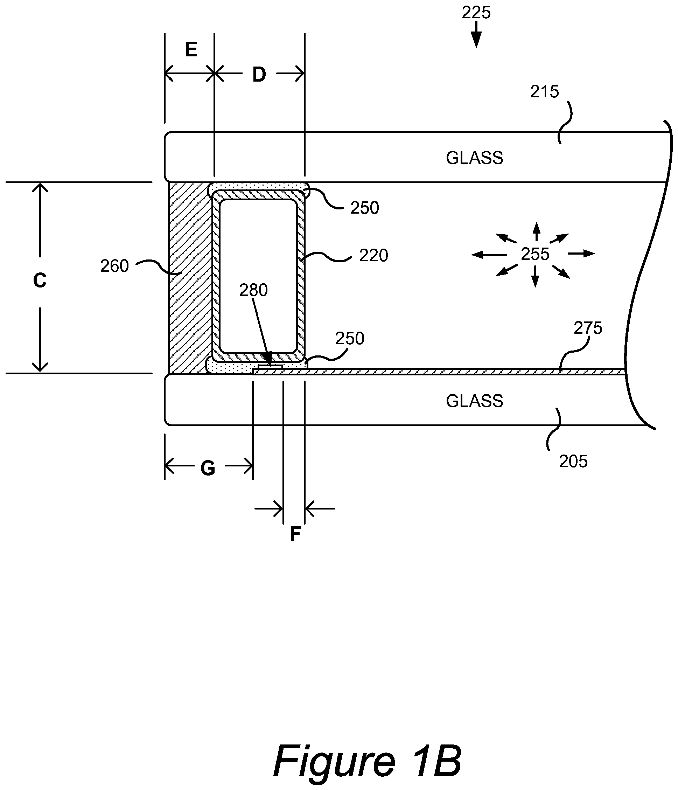

**Figure 1A** is a simplified illustration of an insulated glass unit (IGU) fabrication process, **200,** shown fabricating an IGU, **225.** In this example, the substantially transparent substrates are a first lite, **205,** and a second lite, **215,** registered with a spacer, **220.** Spacer **220** may be, for example, a metal or foam (polymeric) spacer that has a smaller width and length than the first and second lites, **205** and **215.** Some examples of spacers that can be used in IGUs are described in U.S. Patent Application Serial No. 13/312,057, filed on December 6, 2011 and titled "SPACERS FOR INSULATED GLASS UNITS". IGU **225** has an associated interior volume defined by the faces of lites, **205** and **215,** in contact with spacer **220** and the interior perimeter surfaces of spacer **220.** Figure 1B shows a close up cut away perspective of construction aspects of IGU **225.**

During the illustrated fabrication process **200** of IGU **225,** spacer **220** is sandwiched in between and registered with the first and second lites, **205** and **215.** A sealant material is applied so as to lie between the mating surfaces of first and second lites, **205** and **215,** and spacer **220.** Then, the three components are pressed together such that a hermetic seal is formed between the lite and spacer surfaces, thus forming the IGU **225.** The IGU **225** is typically filled with an inert gas so as to provide insulation value, as the inert gas conducts less heat than air. The seal formed between spacer **220** and lites, **205** and **215,** is called a primary seal. A secondary sealant material is typically applied around the perimeter of the spacer and between the glass sheets to form what is commonly referred to as a secondary seal. The secondary seal, although also a sealing element, also provides structural rigidity to the IGU.

**Figure 1B** shows a more detailed structure of IGU **225.** In this example, glass lites **205** and **215** are registered and parallel with each other. Spacer **220** mates on two of its surfaces with the lites with the aid of an adhesive, **250,** e.g. polyisobutylene (PIB), to form the primary seal. A sealed volume, **255,** is therefore formed. A secondary sealant, **260,** is typically used as well, but not necessarily (e.g. if butt joints are to be used). In this example, an electrochromic device coating, **275,** is fabricated on the inner surface of one of the lites, and includes a bus bar, **280,** to provide electrical energy to coating **275** in order to effect switching of the device, e.g., from tinted to clear or the reverse. It is desirable to have an inert and dry atmosphere within interior volume **255** whether the IGU includes a device coating or not. However, it is even more important to maintain the inert and dry environment for IGUs having such device coatings within the interior volume, because many such devices are moisture sensitive and an inert atmosphere prevents any reactive gases from affecting the coating over time (e.g. oxygen).

The primary (and secondary) seal is subject to breach due to mechanical forces acting on the structure. For example, conventionally, if the IGU is made at sea level and the installation site is in the mountains, since the IGU was sealed at sea level, it contains the pressure at sea level. When it was sealed there was no pressure differential between the ambient and the interior volume. Once it is transferred to high altitudes, the sealed volume will have an effective pressure relative to the ambient. This often causes mechanical forces to deleteriously affect the primary (and secondary) seal of the IGU. Conventionally this problem was overcome by using a capillary or breather tube to equilibrate the pressure to equalize the pressure when an IGU has been moved from a first altitude to a second altitude. The problem with conventional breather tubes is that the inert gas exchanges with the ambient and is lost in a relatively short time. Even if the capillary is opened merely to equalize the pressure and then resealed, often there is gas exchange and inert gas is lost. This potentially introduces moisture (despite desiccant in the spacer) and/or, even though resealed, or provides ingress due to failure of the capillary tube to reseal. Loss of inert gas also results in loss of insulation value of the IGU. Embodiments herein provide pressure equalization based on the intended installation site, not the production facility. Also, embodiments provide for this pressure equalization without having to compromise the hermetic seal of the IGU.

One conventional type of primary seal formation for IGUs uses an ambient temperature sealant with high pressure application to form the hermetic primary seal. In other conventional methods, the primary sealant is a hot seal type sealant, e.g., the IGU may be heated in an oven press at temperatures up to 800°C. For example, IGU components may be pressed together while slowly being conveyed through an oven, heating the sealant material sufficiently to flow and form a hermetic bond between the glass lites and the spacer. Concurrently, not only the primary sealing areas but also the IGU components are heated significantly above room temperature and thus the IGUs are vented using a spacer with a vent port. During sealing, air exchange between the volume of the IGU and the external environment occurs at least as a result of the vent port. The IGUs are cooled prior to introduction of inert gas fill, but gas exchange occurs while cooling. Once cooled to ambient, the inert gas is introduced via the vent port and the port sealed. Finally the secondary sealant is applied. Thus, these conventional IGU fabrication methods are designed to specifically avoid pressure or vacuum differentials in the finished IGU.

As described above, one problem with conventional IGU fabrication methods is that if the IGU is manufactured at a particular altitude and then shipped to a higher or lower altitude, then the pressure variance, between inside the sealed IGU and the ambient, creates either a pressurized IGU or a partially evacuated IGU. The lites of a pressurized IGU or partially-evacuated IGU may bulge or depress, which can cause many problems. For example, concavity in an IGU may take a parabolic shape and thus concentrate reflected sunlight creating very hot areas on surrounding structures. Also, due to the resultant mechanical forces, bulged or depressed IGU lites can compromise the seal(s) of the IGU, allowing the inert gas to escape, thus ruining what was meant to be an insulating component of a building's skin. In extreme cases, the IGU could shatter, which may be dangerous to people near or under the IGU when it breaks.

Disclosed herein are various embodiments of methods of manufacturing IGUs that have improved techniques for compensating for pressure variances between the manufacturing site and the installation site of the IGUs. For example, described methods include a gas fill operation where IGUs are filled with a heated or cooled (relative to ambient) inert gas, e.g., argon, xenon, krypton or mixtures thereof. Once filled with heated/cooled inert gas, the IGUs are sealed in order to create (once at ambient temperature) a partially-evacuated or a partially-pressurized IGU, which is referred to herein as a pressure compensated IGU. The described IGUs may compensate for pressure differences between the manufacturing site and the installation site. Described embodiments go against conventional wisdom by intentionally fabricating IGUs with an initial pressure difference at the manufacturing site with the altitude of the installation site in mind. Certain embodiments described herein avoid the use of conventional pressure equalizing capillary or breather tubes, which can allow inert gas fill to escape and/or add unwanted processing steps to IGU fabrication.

In certain described embodiments, the IGUs are formed (the primary seal established) with a heated or cooled inert gas (trapped) within the sealed volume of the IGU and/or otherwise evacuated or pressurized with inert gas at the production facility. The pressure or vacuum within the interior volume, e.g. as a result of the temperature of the heated/cooled inert gas, is chosen so as not to result in implosion or explosion of the IGU, not to compromise the seal(s), and/or not to apply undue stress to any coatings on the lites of the IGU. For example, IGUs having one or more electrochromic device coatings on one or both lites of an IGU can be fabricated using methods described herein. In the described embodiments, the pressure compensated IGUs are manufactured such that the curvature, convex or concave, of the IGU lites is not to the extent that it may damage the seal(s) or any coatings on the surfaces of the IGU lites. The idea is to create a partial pressure or vacuum within the interior volume that approximates the ambient atmospheric pressure at the installation site, so that there is no appreciable pressure differential once installed (and thus no bulge or concavity in the glass once installed). The average temperature of the IGU at the installation site may also be factored in to approximate pressure equalization across seasonal changes, heat load on the window and heating/cooling regimes of the building where the IGU is installed.

Examples of electrochromic device coatings that can be deposited on one or more lites (electrochromic lites) of the pressure compensated IGUs are described in U.S. Patent Application Serial No. 12/772,055 (issued as U.S. Patent No. 8,300,298) filed on April 30, 2010 and titled "Electrochromic Devices," and U.S. Patent Application Serial No. 12/645,159 (issued as U.S. Patent No. 8,432,603) filed on April 30, 2010 and titled "Electrochromic Devices".

The electrochromic device coatings include an electrochromic stack that comprises a series of layers. In many cases, the electrochromic stack includes an electrochromic layer, an electrolyte layer, and an ion storage layer. In other cases, the electrochromic stack may include an electrochromic layer and an ion storage layer with an interfacial region that acts as an electrolyte layer. The electrochromic stack is deposited on a first transparent conducting oxide (TCO) layer on the substantially transparent substrate or over a diffusion barrier on the substantially transparent substrate. A second TCO layer is deposited over the electrochromic stack.

Methods described herein include first forming an IGU by establishing the primary (hermetic) seal, and then introducing or removing inert gas from the interior volume and/or establishing the primary seal in the presence of heated or cooled inert gas, such that the gas is trapped within the interior volume as the IGU is formed.

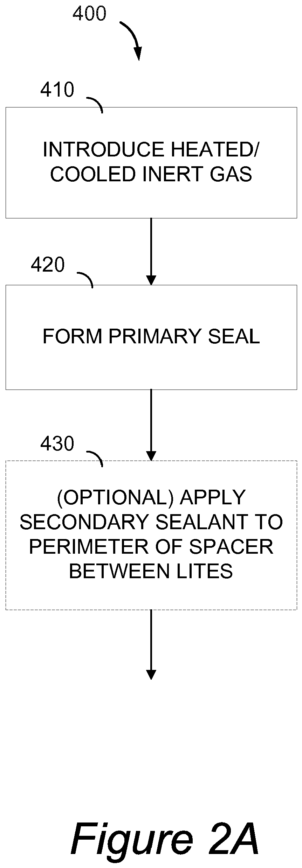

**Figure 2A** is a flowchart illustrating an example of a method of fabricating a pressure compensated IGU, **400,** according to embodiments not forming part of the invention but representing background art that is useful for understanding the invention. The method **400** introduces a heated or cooled inert gas into a space between a (registered) first lite and a second lite and a spacer used to form the IGU (step **410**). Examples of inert gases include argon, xenon, krypton, or a mixture thereof. Argon is typically used, but xenon and krypton have higher insulative properties; and, due to the higher price of the latter two, mixtures are sometimes used.

The gas temperature sealed into the IGU may be between about -50°C to about +150°C. In one embodiment, the inert gas has a temperature of between 30°C and about 150°C. The method also comprises forming a primary seal and thus the IGU (step **420**). Step **420** is an example of a gas fill operation where the interior volume of the IGU is established (primary seal formed) with a heated or cooled inert gas therein. No further fill operation is necessary, and such methods can use standard IGU components, e.g. spacers and sealants. Optionally, method **400** may also comprise applying a secondary sealant to a perimeter of the spacer between the first and second lites (step **430**). Typically, the method **400** further comprises allowing the IGU to come to the ambient temperature at the manufacturing site after step **420** or after step **430.**

In certain embodiments, the IGU fabrication methods involve using an IGU press to press together IGU components (e.g., lites, adhesive and spacer) during one or more operations. In some cases, the IGU press may be located in a chamber to provide a controlled environment or the IGU press itself may provide a controlled environment during the operation(s). For example, the IGU press may be located within an oven chamber or refrigerated chamber during one or more operations to control the temperature of the IGU, the chamber having an inert gas environment. In one example, the chamber may be a conventional IGU press oven configured with inert gas atmosphere such that the IGU is pressed in a heated inert gas atmosphere. In another example, IGU formation is performed in a chamber configured with a cooled inert gas atmosphere. In certain cases, the chamber is configured to supply the inert gas atmosphere in a substantially moisture-free form.

In another example, heated or cooled inert gas is introduced only to some areas of the IGU press, rather than the entire IGU press, prior to IGU formation. In one embodiment, an inert gas is flushed through the registered IGU components in the IGU press during formation of the primary seal to form the IGU. A specific example of one such embodiment is described in more detail in the Example section below. The inert gas may be supplied in a substantially moisture-free form.

In certain embodiments, an IGU, or its components, are heated or cooled before the inert gas is introduced into the IGU (either after the IGU is formed or during primary seal formation). In one embodiment, the inert gas is introduced into a hot IGU having one or more vent ports in the spacer. The one or more vent ports are sealed while the IGU components are still above ambient temperature. In a similar embodiment, an IGU having one or more spacer vent ports is cooled. Inert gas is then introduced into the cooled IGU and the IGU sealed while still cool, thus trapping cooled inert gas in the IGU.

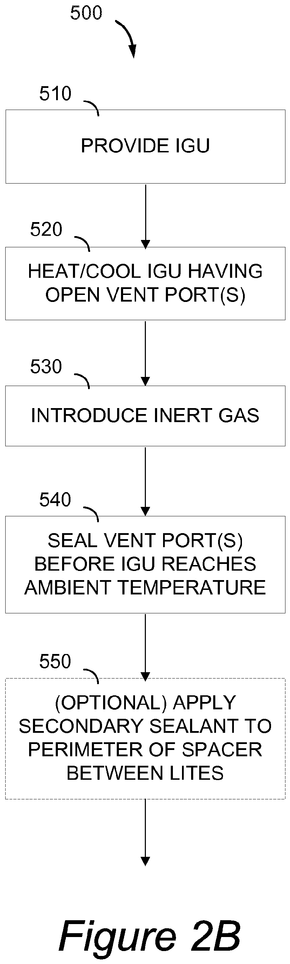

**Figure 2B** is a flowchart illustrating an example of a method of fabricating a pressure compensated IGU, **500**, according to embodiments forming part of the present invention. In this method **500**, the IGU is heated or cooled before the inert gas is introduced into the IGU. As shown, method **500** includes providing an IGU having a first lite, a second lite, and a spacer between the first and second lites (step **510**). Method **500** also includes heating or cooling the IGU having one or more open vent ports in the spacer (step **520**). Method **500** includes introducing an inert gas into the interior volume of the IGU (step **530**). The inert gas may be argon, xenon, krypton, or a mixture thereof. The inert gas may also be heated or cooled. The inert gas may be substantially moisture free. Once the inert gas is introduced, the one or more open vent ports are sealed before the IGU comes to ambient temperature (step **540**). Optionally, method **500** may also include applying a secondary sealant to a perimeter of the spacer between the first and second lites (step **550**).

In yet other embodiments, sealed IGUs, e.g. at ambient temperature or not, have inert gas removed from them, or introduced into them (at ambient temperature or not), via penetration of a seal and then resealing the seal. That is, these embodiments may include addition or removal of inert gas at ambient temperature of the IGU and the gas, or, the IGU and/or the gas may be at other than ambient temperature (e.g. between about -50°C and about +150°C). In this way, for example, the volume exchanged during the introduction or removal of inert gas may be lessened relative to not using heated or cooled gas and/or IGU. For example, it may be required to add inert gas of a particular temperature (based on the entire volume of the interior space) to obtain a final pressure level within the IGU. Rather than exchanging the entire volume with gas at that particular temperature, a smaller volume of *hotter* gas may be introduced to achieve the same end.

The seal may be part of, or otherwise integrated with, the spacer. For example, the spacer may be configured with a seal in the form of a sealable septum. In one embodiment, the sealable septum is self-sealing, e.g. made of a polymeric material that allows penetration of a needle to transfer gas in or out of the interior volume, but which seals upon removal of the needle. In one embodiment, the sealable septum includes a heat sealing polymer and resealing the IGU includes applying heat to the area of the sealing septum penetrated during introduction or removal of inert gas. The instrument, e.g. a needle, used to transfer the gas may be heated or heatable, so that it locally melts the seal's material during penetration thereof, and thus allows the seal material to flow locally and reseal upon removal of the needle. In certain embodiments, a syringe pump is used to introduce or remove inert gas, e.g., via a needle that pierces the sealable septum or other seal. Use of a syringe pump allows for precise volumes to be introduced or removed from the IGU (in embodiments where heated or cooled gas is introduced *while* making the primary seal, e.g. in an IGU press, the (entire) interior volume of the IGU is established simultaneously with introduction of the heated or cooled gas).

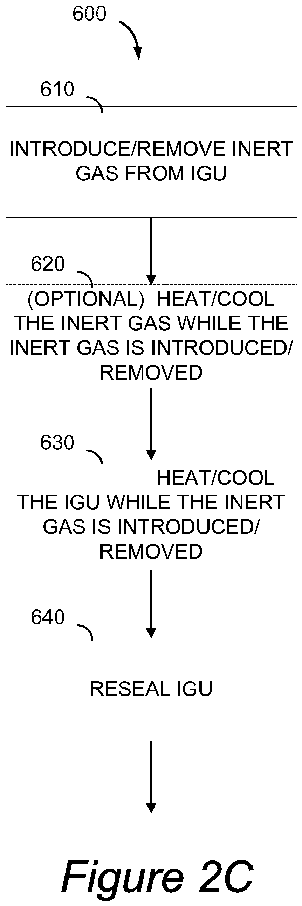

**Figure 2C** is a flowchart illustrating an example of a method of fabricating a pressure compensated IGU, **600**, according to embodiments forming part of the invention. In this method **600**, an inert gas (e.g., argon, xenon, krypton, or a mixture thereof) is removed from, or introduced into, the interior space in the IGU via penetration of a seal. The inert gas may be substantially moisture free. At step **610**, method **600** includes introducing an inert gas into or removing inert gas from the interior space in an IGU by penetrating a seal of the IGU. In some cases, a syringe pump can be used to penetrate the seal of the IGU and remove/introduce inert gas from/to the IGU. Optionally, the inert gas may be heated or cooled, see **620**. The IGU is heated or cooled, see **630**, during transfer of the inert gas into or out of the interior volume. At step **640**, the method **600** reseals the IGU. In some cases, the spacer of the IGU has a sealable septum through which the inert gas is removed or introduced. In one case, the sealable septum comprises a heat sealing polymer. In this case, resealing the IGU can include heating the area of the sealing septum around which was penetrated during introduction or removal of the inert gas. In one embodiment, method **600** may include repeating steps **610-640**, e.g. if preformed pressure compensated IGUs are used to create pressure compensated IGUs having a different pressure within the interior volume. For example, a particular customer reports the elevation of his installation site incorrectly to the manufacturer. The pressure compensated IGUs are fabricated for this elevation. The correct elevation is revealed. The pressure compensated IGUs are recalibrated to the correct interior volume pressure. Re-sealable IGUs have the advantage of allowing such operations.

The methods of fabricating pressure compensated IGUs can include one or more operations of the IGU fabrication processes described in reference to **Figures 1A-****1B.** For example, the methods described with reference to **Figures 2A-2C** can include one or more operations of forming IGUs as described with reference to **Figures 1A-1B**.

### Example I

### Temperatures of Inert Gas sealed in IGU during fabrication of Pressure Compensated IGUs

Based on Ideal Gas Law, one can calculate the desired fill temperature of the inert gas that needs to be sealed into an IGU in order to compensate for the pressure variance at various altitudes and room temperature at the installation site. These particular calculations do not take into account the IGU itself being heated or cooled, that is, assuming room temperature of the IGU components (often the primary sealant and area is heated during IGU formation in a standard IGU press). That is, if the IGU is sealed with inert gas at the fill temperature associated with the given altitude of the installation site, the IGU internal pressure will be equalized to the external pressure when the IGU is at room temperature.

**Table 1** is an example of a chart indicating the desired fill temperatures of inert gas (e.g., argon) needed to be sealed in an IGU in order to create a pressure compensated IGU for particular altitudes at the installation site, according to embodiments. The IGUs may be fabricated by methods herein where the IGU is sealed with inert gas of the particular temperature therein. These calculations are for Argon, but similar calculations for other inert gases and mixtures of inert gases can be determined by ordinary artisans. By fabricating pressure compensated IGUs as described herein, bowing of the glass lite, e.g. convex or concave, of the *installed* IGU can be substantially avoided - and inert gas (leakage) loss can also substantially avoided while obviating the need for capillary or breather tubes for pressure equalization. These temperatures listed in **Table 1** assume that the IGU fabrication takes place at approximately 500 feet above sea level, thus only ambient or heated gas is described, not cooled gas. Ordinary artisans could also calculate similar temperature values for cooled gases, used to make positive pressure IGUs at high elevation for installation at lower elevation.

| **Table 1** | | | | |
|---|---|---|---|---|
| **Altitude Above Sea Level** | | **Absolute Atmospheric Pressure** | | **Argon Fill Temp** |
| **feet** | **meters** | **psi** | **kPa** | **°C** |
| 500 | 152 | 14.4 | 99.5 | 25 |
| 1000 | 305 | 14.2 | 97.7 | 29 |
| 1500 | 457 | 13.9 | 96 | 36 |
| 2000 | 610 | 13.7 | 94.2 | 40 |
| 2500 | 762 | 13.4 | 92.5 | 47 |
| 3000 | 914 | 13.2 | 90.8 | 52 |
| 3500 | 1067 | 12.9 | 89.1 | 60 |
| 4000 | 1219 | 12.7 | 87.5 | 65 |
| 4500 | 1372 | 12.5 | 85.9 | 70 |
| 5000 | 1524 | 12.2 | 84.3 | 79 |
| 6000 | 1829 | 11.8 | 81.2 | 91 |
| 7000 | 2134 | 11.3 | 78.2 | 107 |
| 8000 | 2438 | 10.9 | 75.3 | 121 |
| 9000 | 2743 | 10.5 | 72.4 | 136 |
| 10000 | 3048 | 10.1 | 69.7 | 152 |

### Example II

### Fabrication of Pressure Compensated IGUs

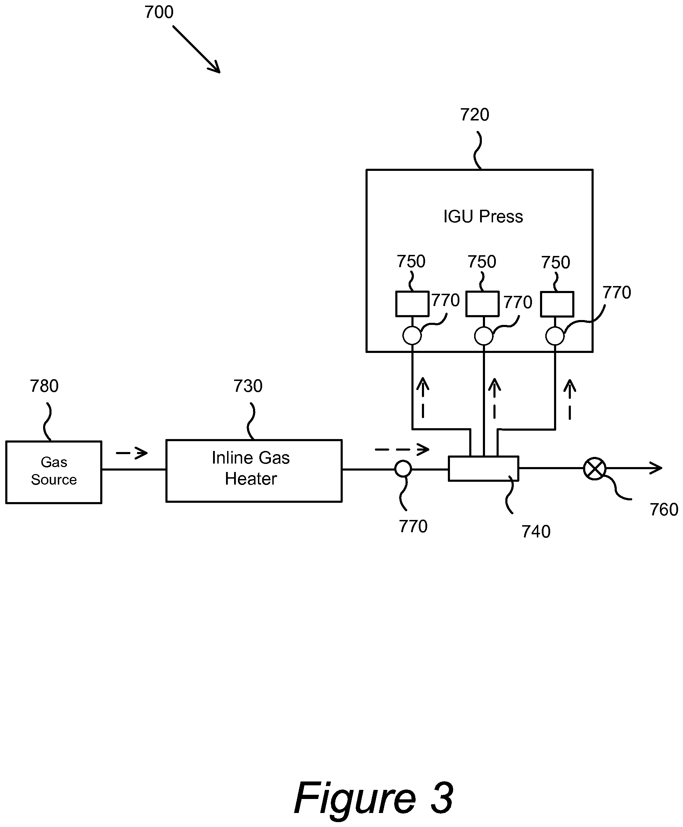

**Figure 3** depicts a schematic drawing of exemplary apparatus for fabricating pressure compensated IGUs, **700**. In this illustration, the apparatus **700** includes an IGU press, **720**, fitted with an inline gas heater, **730** (e.g., the commercially available heater from Imtec Acculine, LLC. of Fremont, California) that delivers heated gas (e.g., argon) into a four-way gas delivery manifold, **740**. The IGU press **720** includes three gas filling ports, **750**. Depending upon the size of the IGU, between one and three of gas filling ports **750** are used for gas fill of IGUs during operation. A four-way gas manifold **740** is fitted to the system apparatus **700**, whereby three of the manifold ports are plumbed to deliver gas to the three gas filling ports 750 of IGU press **720**. The final (fourth) manifold port of four-way manifold **740** is used for a bypass valve, **760**, (e.g. fitted with a solenoid activated valve) to release pressure if necessary or allow gas to flow out of the system while coming up to the desired temperature. Inline gas heater **730** feeds into the four-way manifold **740**. The gas lines to and from the four-way manifold **740** are fitted with thermocouples, **770**, for measuring the gas temperature within the gas lines, e.g., just after the inline gas heater **730**, just after exiting the four-way manifold **740** and just before the filling ports **750** of IGU press **720** (the heater also has internal thermocouples). Inline gas heater **730** receives gas from the gas source **780**.

During operation, when inline gas heater **730** is on and IGUs are not being filled, bypass valve **760** is open and the heated gas is allowed to pass through the four-way manifold **740**, not to the IGU press filling ports **750**, and out the open bypass valve **760**. During a filling operation, bypass valve **760** is closed, and the heated gas flows to one or more filling ports **750** of the IGU press **720** (gas filling ports have internal valves as well, so that one, two or three can be used). Apparatus **700** is configured to deliver gas at temperatures between about 25°C and about 260°C. In a typical gas fill operation, gas used to make IGUs is at a temperature between about 90°C and about 150°C. A number of 14" by 14" IGUs were successfully fabricated using heated argon using apparatus **700** as illustrated in **Figure 3**. IGUs were fabricated using 90°C, 120°C and 150°C argon and submitted for durability testing.

Although the foregoing embodiments have been described in some detail to facilitate understanding, the described embodiments are to be considered illustrative and not limiting. It will be apparent to one of ordinary skill in the art that certain changes and modifications can be practiced within the scope of the appended claims. For example, although an inline heater has been described with reference to **Figure 3**, another temperature control unit can be used such as a refrigeration unit for cooling the inert gas.

## Claims

1. A method of fabricating a pressure compensated insulated glass unit (225), the method comprising:
a) providing a vented insulated glass unit (225) having a first lite (205), a second lite (215), and a spacer (220) between the first and second lites, wherein an electrochromic device coating (275) is disposed on a surface of at least one of the lites, the spacer comprising one or more open vent ports;
b) heating or cooling the vented insulated glass unit (225);
c) introducing an inert gas into the interior volume (255) of the heated or cooled, vented insulated glass unit via the one or more vent ports; and
d) after introducing the inert gas in c), sealing the one or more open vent ports before the insulated glass unit comes to ambient temperature.

2. The method of claim 1, wherein the inert gas is argon, xenon, krypton or a mixture thereof, and/or wherein the inert gas is substantially moisture free.

3. The method of claim 2, further comprising applying a secondary sealant (260) to the perimeter of the insulated glass unit.

4. A method of fabricating a pressure compensated insulated glass unit (225), the method comprising:
a) providing an insulated glass unit (225) having a first lite (205), a second lite (215), and a spacer (220) between the first and second lites, wherein an electrochromic device coating (275) is disposed on a surface of at least one of the lites;
b) introducing or removing an inert gas into or from the interior volume (255) of the insulated glass unit by penetrating a seal in the spacer (220) of the insulated glass unit, wherein the insulated glass unit is heated or cooled while the inert gas is introduced or removed; and
c) resealing the insulated glass unit.

5. The method of claim 4, wherein the seal of the spacer (220) of the insulated glass unit (225) is a sealable septum through which the inert gas is removed or introduced, optionally wherein the sealable septum comprises a heat sealing polymer and c) comprises applying heat to the area of the sealing septum penetrated during b).

6. The method of claim 5, wherein a syringe pump is used during b).

7. The method of claim 4, wherein the inert gas is argon, xenon, krypton or a mixture thereof, and/or wherein the inert gas is substantially moisture free.

## Patentansprüche

1. Verfahren zur Herstellung einer druckkompensierten Isolierglaseinheit (225), wobei das Verfahren umfasst:
a) eine belüftete Isolierglaseinheit (225) mit einer ersten Fensterscheibe (205), einer zweiten Fensterscheibe (215) und einem Abstandshalter (220) zwischen der ersten und der zweiten Fensterscheibe bereitstellen, wobei auf der Oberfläche von mindestens einer Fensterscheibe eine elektrochrome Beschichtung (275) angeordnet ist und der Abstandshalter eine oder mehrere offene Entlüftungsöffnungen aufweist;
b) die belüftete Isolierglaseinheit (225) erwärmen oder abkühlen;
c) ein Inertgas über eine oder mehrere Entlüftungsöffnungen in das Innenvolumen (255) der erwärmten oder abgekühlten belüfteten Isolierglaseinheit einbringen; und
d) nach dem Einbringen des Inertgases in c) eine oder mehrere offene Entlüftungsöffnungen versiegeln, bevor sich die Isolierglaseinheit auf Umgebungstemperatur erwärmt oder abkühlt.

2. Verfahren gemäß Anspruch 1, wobei es sich bei dem Inertgas um Argon, Xenon, Krypton oder eine Mischung davon handelt und/oder wobei das Inertgas im Wesentlichen trocken ist.

3. Verfahren gemäß Anspruch 2, ferner umfassend ein sekundäres Dichtungsmittel (260) auf die äußere Begrenzung der Isolierglaseinheit aufbringen.

4. Verfahren zur Herstellung einer druckkompensierten Isolierglaseinheit (225), wobei das Verfahren umfasst:
a) eine Isolierglaseinheit (225) mit einer ersten Fensterscheibe (205), einer zweiten Fensterscheibe (215) und einem Abstandshalter (220) zwischen der ersten und der zweiten Fensterscheibe bereitstellen, wobei auf der Oberfläche von mindestens einer Fensterscheibe eine elektrochrome Beschichtung (275) angeordnet ist;
b) durch das Durchdringen einer Dichtung im Abstandshalter (220) der Isolierglaseinheit ein Inertgas in das Innenvolumen (255) der Isolierglaseinheit einbringen oder aus diesem entfernen, wobei die Isolierglaseinheit während des Einführens oder Entfernens des Inertgases erwärmt oder abgekühlt wird; und
c) die Isolierglaseinheit erneut versiegeln.

5. Verfahren gemäß Anspruch 4, wobei die Dichtung des Abstandshalters (220) der Isolierglaseinheit (225) eine verschließbare Scheidewand ist, durch die das Inertgas entfernt oder eingeführt wird, wobei die verschließbare Scheidewand gegebenenfalls ein Heißsiegelpolymer aufweist und c) umfasst, dass während der Durchdringung in b) Wärme auf die Fläche der dichtenden Scheidewand aufgebracht wird.

6. Verfahren gemäß Anspruch 5, wobei während b) eine Spritzenpumpe verwendet wird.

7. Verfahren gemäß Anspruch 4, wobei es sich bei dem Inertgas um Argon, Xenon, Krypton oder eine Mischung davon handelt und/oder wobei das Inertgas im Wesentlichen trocken ist.

## Revendications

1. Un procédé de fabrication d'un vitrage isolé compensé en pression (225), le procédé comprenant :
a) la fourniture d'un vitrage isolé ventilé (225) comportant une première vitre (205), une seconde vitre (215) et une entretoise (220) entre les première et seconde vitres, dans lequel un revêtement électrochromique du dispositif (275) est disposé sur une surface d'au moins une des vitres, l'entretoise comprenant un ou plusieurs orifices d'évent ouverts ;
b) le chauffage ou le refroidissement du vitrage isolé ventilé (225) ;
c) l'introduction d'un gaz inerte dans le volume intérieur (255) du vitrage isolé ventilé chauffé ou refroidi par l'intermédiaire du ou des orifices d'évent ; et
d) après l'introduction du gaz inerte en c), le scellement du ou des orifices d'évent ouverts avant que le vitrage isolé arrive à température ambiante.

2. Le procédé selon la revendication 1, dans lequel le gaz inerte est de l'argon, du xénon, du krypton ou un mélange de ceux-ci et/ou dans lequel le gaz inerte est pratiquement exempt d'humidité.

3. Le procédé de la revendication 2, comprenant en outre l'application d'un produit de scellement secondaire (260) sur le périmètre du vitrage isolé.

4. Un procédé de fabrication d'un vitrage isolé compensé en pression (225), le procédé comprenant :
a) la fourniture d'un vitrage isolé (225) comportant une première vitre (205), une seconde vitre (215) et une entretoise (220) entre les première et seconde vitres, dans lequel un revêtement électrochromique du dispositif (275) est disposé sur une surface d'au moins une des vitres ;
b) l'introduction ou le retrait d'un gaz inerte dans ou à partir du volume intérieur (255) du vitrage isolé, par la pénétration d'un joint dans l'entretoise (220) du vitrage isolé, dans lequel le vitrage isolé est chauffé ou refroidi pendant que le gaz inerte est introduit ou retiré ;
c) le rescellement du vitrage isolé.

5. Le procédé selon la revendication 4, dans lequel le joint de l'entretoise (220) du vitrage isolé (225) est une cloison qui peut être scellée par laquelle le gaz inerte est retiré ou introduit, dans lequel éventuellement la cloison qui peut être scellée se compose d'un polymère de scellement thermique et c) comprend l'application de chaleur à la région de la cloison étant scellée et pénétrée pendant b).

6. Le procédé selon la revendication 5, dans lequel une pompe à seringue est utilisée pendant b).

7. Le procédé selon la revendication 4, dans lequel le gaz inerte est de l'argon, du xénon, du krypton ou un mélange de ceux-ci, et/ou dans lequel le gaz inerte est pratiquement exempt d'humidité.
